Europäisches Patentamt

European Patent Office

Office européen des brevets

(11) Veröffentlichungsnummer: **0 240 816**
**B1**

(12) **EUROPÄISCHE PATENTSCHRIFT**

(45) Veröffentlichungstag der Patentschrift:
**27.12.89**

(51) Int. Cl.⁴: **F16J 9/22**

(21) Anmeldenummer: **87104209.9**

(22) Anmeldetag: **21.03.87**

(54) **Kolben für eine Kolben-Zylinderanordnung.**

(30) Priorität: **05.04.86 DE 3611478**

(43) Veröffentlichungstag der Anmeldung:
**14.10.87 Patentblatt 87/42**

(45) Bekanntmachung des Hinweises auf die Patenterteilung:
**27.12.89 Patentblatt 89/52**

(84) Benannte Vertragsstaaten:
**CH DE FR LI SE**

(56) Entgegenhaltungen:
**DE-C- 499 372**
**DE-C- 647 505**
**FR-A- 1 417 720**
**GB-A- 1 233 510**
**GB-A- 2 080 485**

(73) Patentinhaber: **BBC Aktiengesellschaft Brown, Boveri & Cie., Haselstrasse, CH-5401 Baden(CH)**

(72) Erfinder: **Plettner, Horst, Bogenstrasse 44, D-6450 Hanau 11(DE)**

(74) Vertreter: **Rupprecht, Klaus, Dipl.-Ing. et al, c/o BBC Brown Boveri Aktiengesellschaft ZPT Postfach 100351 Kallstadter Strasse 1, D-6800 Mannheim 1(DE)**

**Beschreibung**

Die Erfindung betrifft einen Kolben gemäß dem Oberbegriff des Anspruches 1.

In der Zylinderbohrung einer Kolben-Zylinderanordnung ist der Kolben, dessen Kolbenstange aus der Kolben-Zylinderanordnung herausragt, so zu führen, daß einerseits Verkantungen und andererseits Abdichtprobleme vermieden werden. Aus diesem Grunde besitzt ein derartiger Kolben eine Kolbenringdichtung und darüber hinaus einen Führungsring, dessen Material von dem des Kolbens abweicht, damit zwischen der Innenfläche der Zylinderbohrung und diesem Führungsring günstige Gleiteigenschaften erzeugt werden. Das Material, das im allgemeinen verwendet wird, ist eine Broncelegierung, die bei bekannten Kolbenanordnungen aufgeschweißt und danach bearbeitet ist. Es besteht auch die Möglichkeit, in die Außenfläche des Kolbens eine Nut einzubringen, in die ein geschlitzter Führungsring aus Metall oder aus Kunststoff lose eingelegt ist. Den Führungsring aufzuschweißen, ist aufwendig und teuer; den Führungsring lose einzulegen ist bei hohen Geschwindigkeiten und hohen Dämpfungsdrücken ungeeignet.

Aufgabe der Erfindung ist es, eine Kolbenführung zu schaffen, die die Vorteile des aufgeschweißten Führungsringes mit denen des lose eingelegten Führungsringes kombiniert.

Diese Aufgabe wird erfindungsgemäß gelöst durch die kennzeichnenden Merkmale des Anspruches 1.

Weitere vorteilhafte Ausgestaltungen der Erfindung, insbesondere die wirtschaftlich günstigste Anordnung des Fortsatzes sind aus den Unteransprüchen 2 bzw. 3 zu entnehmen.

Zwar ist aus der GB-PS 1 233 510 bekannt, an einem im Querschnitt L-förmigen Kolbenring einen Fortsatz anzuformen, der in eine an der Außenfläche des Kolbens angeformte Nut eingreift. Da der Ring aber entfernbar sein soll, ist er nur als mehrteiliger Ring denkbar; in jedem Falle muß er geschlitzt sein, da er sonst kaum montierbar ist. Ein einteiliger, im Preßsitz aufsetzbarer Führungsring jedoch ist aus der GB-PS 1 233 510 nicht entnehmbar.

Zur Montage des Führungsringes geht man so vor, daß zunächst die entsprechende Nut an der Außenfläche des Kolbens eingedreht wird; so dann wird der Führungsring über diese Kolbenaußenfläche geschoben und der Fortsatz in die Nut eingebördelt.

Darüberhinaus besteht die Möglichkeit, den Führungsring durch Aufschrumpfen auf die Kolbenaußenfläche aufzubringen, wodurch ein Preßsitz hergestellt wird, der praktisch dem Aufschweißen des Führungsringes entspricht.

Mit der Erfindung werden folgende Vorteile erzielt: Als Kolbenring kann jedes Material verwendet werden; eine spezielle Schweißbarkeit ist nicht gefordert. Das Aufschrumpfen des Führungsringes ist eine einfach durchführbare Sache und damit ist ein Spalt zwischen dem Kolben und dem Führungsring vermieden; das Spiel zwischen dem Kolben und dem Zylinder bzw. der Zylinderinnenfläche ist eng tolerierbar.

Bei hohen Geschwindigkeiten baut sich bei einem lose eingelegten Führungsring ein Druck auf, und zwar zwischen der Innenfläche des Führungsringes und der Außenfläche des Kolbens. Da hierdurch Bewegungen des Führungsringes erzeugt werden, besteht die Gefahr eines erhöhten Verschleißes zwischen dem Führungsring und der Bohrungsinnenwand. Mit der erfindungsgemäßen Ausgestaltung wird dies vermieden. Darüberhinaus entfällt auch ein für die Montage notwendiger Schlitz in dem Führungsring, wodurch bei hohen Dämpfungsdrücken auch die Kolbenringdichtung geschützt wird. Die Breite des Führungsringes wird zweckmäßigerweise groß gewählt, um den Druck bis zur Dichtung hin abzubauen; daß zusätzlich auf der Außenfläche des Führungsringes Nuten vorgesehen sein können, um Schmutz zu fangen, ist an sich bekannt.

Anhand der Zeichnung, in der ein Ausführungsbeispiel der Erfindung dargestellt ist, soll die Erfindung näher erläutert und beschrieben werden.

Es zeigt:

Fig. 1 eine Schnittansicht durch einen Führungsring, vor dem Aufbringen auf einen Kolben und

Fig. 2 eine Teilansicht eines Kolbens mit Kolbenstange und aufgesetztem Führungsring.

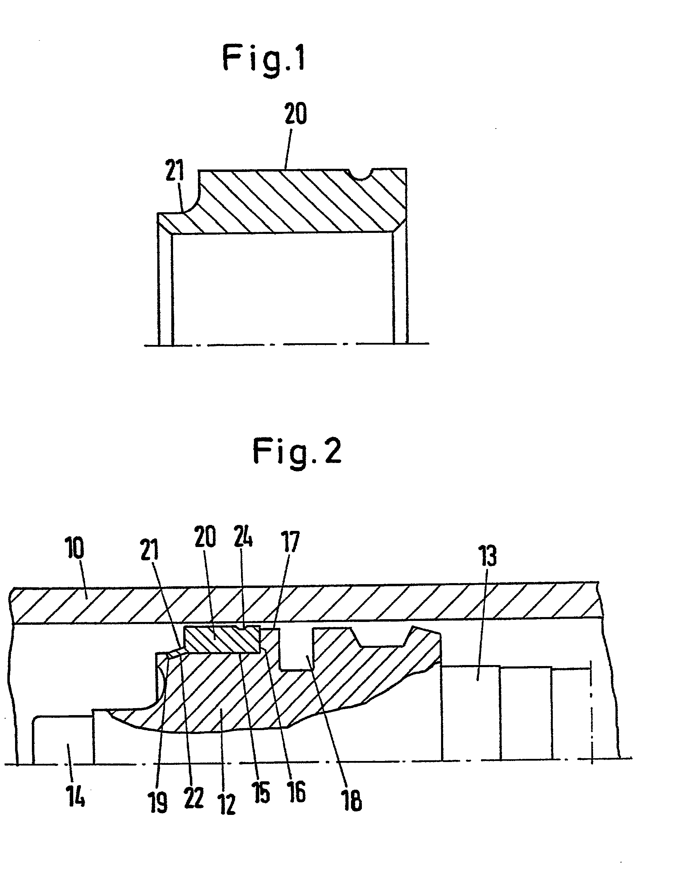

Innerhalb des Zylinders 10 einer Kolben-Zylinderanordnung, die in der Figur 2 nur teilweise zu sehen ist, ist ein Kolben 12 geführt, an dessen rechtem Ende eine Kolbenstange 13 und an dessen linkem Ende ein Dämpfungsfortsatz 14 vorgesehen ist. Der Kolben besitzt eine Kolbenringfläche 15, die zur Kolbenstange 13 hin mittels eines Absatzes 16 begrenzt ist, über den sich der Kolbenaußendurchmesser von der Fläche 15 erweitert. In dem erweiterten Bereich, der die Bezugsziffer 17 aufweist, ist eine tiefe Nut 18 eingedreht, die zur Aufnahme einer nicht näher dargestellten Kolbenringdichtung dient.

In der Fläche 15 ist eine Nut 19 eingebracht.

Auf die Fläche 15 wird ein Führungsring 20 aufgeschoben, der an seinem in der Zeichnung linken Ende einen Fortsatz 21 aufweist, dessen Innendurchmesser dem Innendurchmesser des Führungsringes 20 entspricht und dessen Außendurchmesser gegenüber dem Außendurchmesser des Führungsringes 20 erheblich verringert ist. Dieser Fortsatz 21, der zylinderförmig von dem Führungsring 20 an dessen einem Ende vorspringt, ist so angeordnet und ausgebildet, daß er nach Aufschieben des Führungsringes 20 auf die Fläche 15 mit Anschlag des Führungsringes an dem Ansatz 16 in die Nut 19 eingebördelt werden kann. Damit dies vereinfacht ist, ist die Nut 19 an ihrem dem Führungsring zugewandten Wandende mit einer Abrundung oder Anfasung 22 versehen, wodurch das Einbiegen bzw. Einbördeln des Fortsatzes 21 erleichtert wird.

Der Führungsring 20 wird auf die Fläche 15 zusätzlich noch im Preßsitz durch Aufschrumpfen aufgebracht, so daß ein optimaler Sitz des Führungsringes 20 auf der Kolbenaußenfläche erzielt wird. Zusätzlich befindet sich auf der Außenfläche des Führungsringes 20 eine Rille 24, deren Aufgabe es ist, Schmutz einzufangen.

Der Führungsring ist ein Ring aus Metall, vorzugsweise aus Bronce, aus einem Material also, das gute Gleiteigenschaften zur Innenfläche des Zylinders 10 aufweist. Es kann natürlich jedes Material mit guten Gleiteigenschaften verwendet werden, da gute Schweißverträglichkeit nicht mehr erforderlich ist.

Der Führungsring 20 kann dabei vor dem Aufsetzen bzw. Einbördeln bearbeitet sein; es besteht auch die Möglichkeit, den Führungsring 20 aufzuschrumpfen und einzubördeln und erst danach fertig zu bearbeiten.

## Patentansprüche

1. In der Bohrung einer Kolben-Zylinderanordnung hin- und herbewegbarer Kolben mit einem an seiner Außenfläche vorgesehenen Führungsring zu seiner Führung innerhalb der Zylinderbohrung, dadurch gekennzeichnet, daß der geschlossene, im Preßsitz die Außenfläche des Kolben (15) in axialer Richtung umgebende Führungsring (20) an seinem einen axialen Ende an einem Ansatz (16) des Kolbens anliegt und andererseits im Bereich seiner Innenfläche einen axial vorspringenden, kragenförmigen Fortsatz (21) mit gegenüber dem Führungsring (20) erheblich geringerem Außendruchmesser aufweist, der in eine an der Außenfläche des Kolbens (15) vorhandene Nut (19) – diese in axialer Richtung ausfüllend – eingebrödelt ist.

2. Kolben nach Anspruch 1, mit einer Kolbenringdichtung, dadurch gekennzeichnet, daß der Fortsatz (21) an dem Ende des Führungsringes angeformt ist, das der Kolbenringdichtung (18) entgegengesetzt liegt.

3. Kolben mit einer Kolbenstange (15), nach Anspruch 2, dadurch gekennzeichnet, daß der Fortsatz (21) an seinem der Kolbenstange entgegengesetzten Ende angeformt ist.

## Claims

1. Piston moveable backwards and forwards in the bore of a piston-cylinder arrangement and having a guide ring provided on its outer surface for guiding it within the cylinder bore, characterized in that the continuous guide ring (20) surrounding the outer surface of the piston (15) in axial direction with a press fit rests at one of its axial ends against a shoulder (16) of the piston and at the other end, in the region of its inner surface, has an axially protruding, collar-shaped continuation (21) which has a considerably smaller outside diameter compared to the guide ring (20) and is rolled into a groove (19) present at the outer surface of the piston (15), filling said groove in axial direction.

2. Piston according to Claim 1, having a piston ring seal, characterized in that the continuation (21) is integrally formed at that end of the guide ring which lies opposite the piston ring seal (18).

3. Piston having a piston rod (13), according to Claim 2, characterized in that the continuation (21) is integrally formed at its end opposite to the piston rod.

## Revendications

1. Piston mobile en va-et-vient dans l'alésage d'un agencement piston-cylindre, comportant une bague de guidage prévue sur sa surface extérieure afin de le guider à l'intérieur de l'alésage du cylindre, caractérisé par le fait que la bague de guidage fermée (20) entourant en direction axiale, avec serrage, la surface extérieure du piston (15) s'applique en sa première extrémité contre un épaulement (16) du piston et présente de l'autre côté, dans la région de sa surface intérieure, un prolongement en forme de collet (21) faisant saillie axialement, ayant un diamètre extérieur notablement réduit par rapport a la bague de guidage (20) et serti dans une gorge (19) présente a la surface extérieure du piston (15), gorge qu'il comble en direction axiale.

2. Piston selon revendication 1, avec un organe d'étanchéité annulaire, caractérisé par le fait que le prolongement (21) est formé à l'extrémité de la bague de guidage située a l'opposé de l'organe d'étanchéité annulaire (18) du piston.

3. Piston avec une tige de piston (13), selon revendication 2, caractérisé par le fait que le prolongement (21) est formé a son extrémité opposée à la tige de piston.

# Fig.1

# Fig.2